# EUROPÄISCHE PATENTSCHRIFT

(11) **EP 0 941 892 B1**
(45) Veröffentlichungstag und Bekanntmachung des Hinweises auf die Patenterteilung: **15.09.2004**
(21) Anmeldenummer: 99104487.6
(22) Anmeldetag: 05.03.1999
(51) Int. Cl.: B60R 1/12

(54) **Aussenrückblickspiegel für Fahrzeuge, vorzugsweise für Kraftfahrzeuge**
Exterior rear view mirror, in particular for a motor vehicle
Rétroviseur extérieur notamment pour véhicule à moteur

(30) Priorität: 13.03.1998 DE 29804489 U
(43) Veröffentlichungstag der Anmeldung: 15.09.1999
(73) Patentinhaber: Schefenacker Vision Systems Germany GmbH & Co. KG, 73730 Esslingen (DE)
(72) Erfinder: Waldmann, Bernd, 72622 Nürtingen (DE); Secanu, Florin, 72622 Nürtingen (DE)
(74) Vertreter: Kohl, Karl-Heinz, Dipl.-Ing.

(56) Entgegenhaltungen:
- DE-A- 3 803 510
- DE-A- 19 538 770
- DE-U- 29 702 746
- US-A- 5 669 699
- PATENT ABSTRACTS OF JAPAN vol. 013, no. 001 (P-808), 6. Januar 1989 (1989-01-06) -& JP 63 210691 A (HONDA MOTOR CO LTD;OTHERS: 01), 1. September 1988 (1988-09-01)

## Beschreibung

Die Erfindung betrifft einen Außenrückblickspiegel für Fahrzeuge, vorzugsweise für Kraftfahrzeuge, nach dem Oberbegriff des Anspruches 1.

Es sind Außenrückblickspiegel bekannt, deren Gehäuse an der Rückseite mit einem Lichtfenster versehen sind. Im Gehäuse des Spiegelkopfes ist eine Glühbirne vorgesehen, die beispielsweise als Wiederholblinkleuchte dient. Das von der Glühbirne ausgesandte Licht gelangt durch das Lichtfenster nach außen.

Beim gattungsgemäßen Außenrückblickspiegel (DE 297 027 46 U) weist das Spiegelgehäuse ein aus Lichtleitermaterial bestehendes Lichtfenster auf. Es ist bandförmig ausgebildet und mit einem Halterungsteil lösbar am Spiegelgehäuse gehalten. An der dem Kraftfahrzeug zugewandten Schmalseite des Lichtfensters sitzt die Lichtquelle, deren Licht innerhalb des Lichtleitermaterials zum gegenüberliegenden Endbereich des Lichtfensters geleitet wird. Dort wird das Licht gebündelt bzw. konzentriert und nach außen gelenkt. Die Lichtquelle befindet sich außerhalb der das Lichtfenster aufnehmenden Öffnung hinter der Wandung des Spiegelgehäuses. Dadurch ist eine gleichmäßige Ausleuchtung des Lichtfensters aufwendig. Außerdem ist das Licht bei schräg einfallendem Sonnenlicht nur ungenügend zu erkennen.

Es ist ferner ein Regensensor bekannt (JP 63 210691 A), der im Außenrückblickspiegel angeordnet ist und mit dem das Auftreten von Regentropfen ermittelt wird. Der Erfindung liegt die Aufgabe zugrunde, den gattungsgemäßen Außenrückblickspiegel so auszubilden, daß sein Lichtfenster bei einfacher und kostengünstiger Fertigung im beleuchteten Zustand zuverlässig von außen erkennbar ist.

Diese Aufgabe wird beim gattungsgemäßen Außenrückblickspiegel erfindungsgemäß mit den kennzeichnenden Merkmalen des Anspruches 1 gelöst.

Beim erfindungsgemäßen Außenrückblickspiegel besteht zumindest ein Teil des Lichtfensters aus Lichtleitermaterial. Das von der Lichtquelle ausgesandte Licht wird durch das Lichtleitermaterial verteilt. Es reicht somit grundsätzlich eine einzige Lichtquelle aus, um den Bereich des Lichtleitermaterials vollständig zu beleuchten. Dadurch ist das Lichtfenster einwandfrei, auch bei Tag, zu erkennen, wenn die Lichtquelle eingeschaltet ist. Vorzugsweise besteht das gesamte Lichtfenster aus Lichtleitermaterial.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsbeispiele näher erläutert. Es zeigen
- Fig. 1: eine Rückansicht eines erfindungsgemäßen Außenrückblickspiegels,
- Fig. 2: in vergrößerter Darstellung einen Schnitt längs der Linie II-II in Fig. 1,
- Fig. 3: in einer Darstellung entsprechend Fig. 1 eine zweite Ausführungsform eines erfindungsgemäßen Außenrückblickspiegels,
- Fig. 4: eine Rückansicht einer beispielhaften, nicht zur Erfindung gehörenden Ausführungsform eines Außenrückblickspiegels,
- Fig. 5: einen Querschnitt durch den Außenrückblickspiegel gemäß Fig. 4,
- Fig. 6: einen Schnitt durch ein Spiegelkopfgehäuse einer dritten Ausführungsform eines erfindungsgemäßen Außenrückblickspiegels,
- Fig. 7: eine Ansicht in Richtung des Pfeiles VII in Fig. 6,
- Fig. 8: ein Lichtfenster einer vierten Ausführungsform eines erfindungsgemäßen Außenrückblickspiegels.

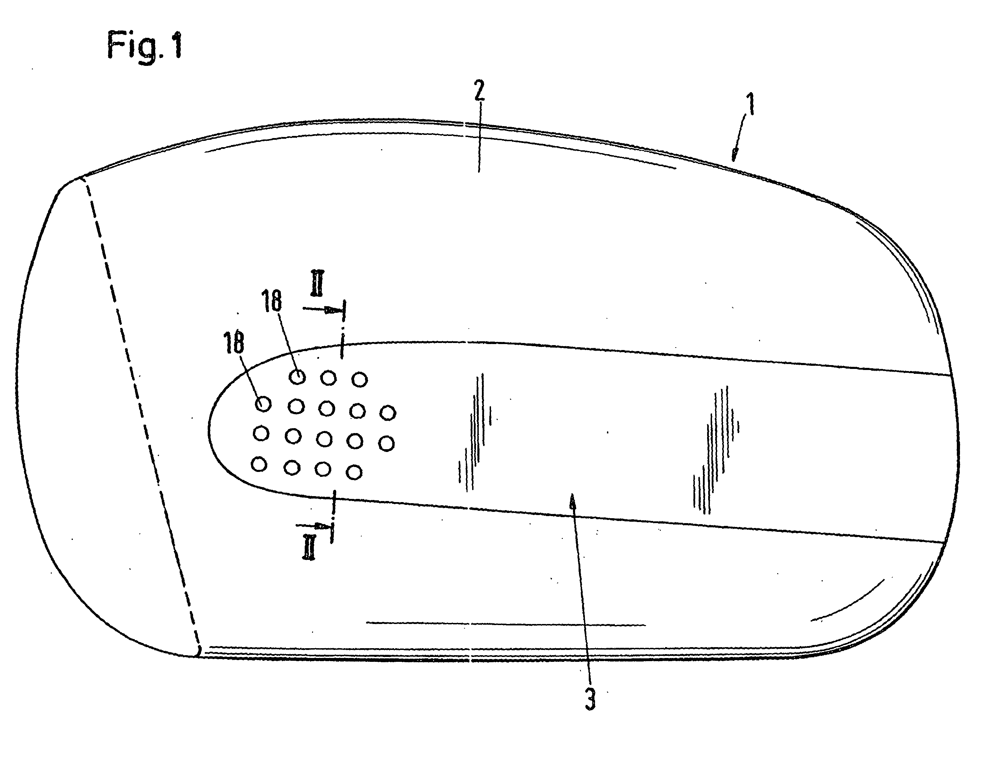

Der Außenrückblickspiegel ist für Kraftfahrzeuge vorgesehen und hat einen Spiegelkopf 1, der mit einem (nicht dargestellten) Spiegelfuß verbunden ist, mit dem der Außenrückblickspiegel am Kraftfahrzeug befestigt ist. Der Spiegelkopf 1 ist gegenüber dem Spiegelfuß vorzugsweise abklappbar, so daß er aus seiner Gebrauchsstellung in eine Parkstellung verstellt werden kann. Der Spiegelkopf 1 hat ein Spiegelkopfgehäuse 2, das in Fig. 1 in Rückansicht dargestellt ist. Das Gehäuse 2 weist an seiner Vorderseite in bekannter Weise ein Spiegelglas auf, das auf einer verstellbaren Trägerplatte befestigt ist.

Das Gehäuse 2 ist an seiner Rückseite mit einem Lichtfenster 3 versehen, das etwa in halber Höhe des Gehäuses 2 vorgesehen ist und sich vom Spiegelfuß aus bis nahe an das am weitesten vom Spiegelfuß entfernt liegende Ende des Spiegelgehäuses erstreckt.

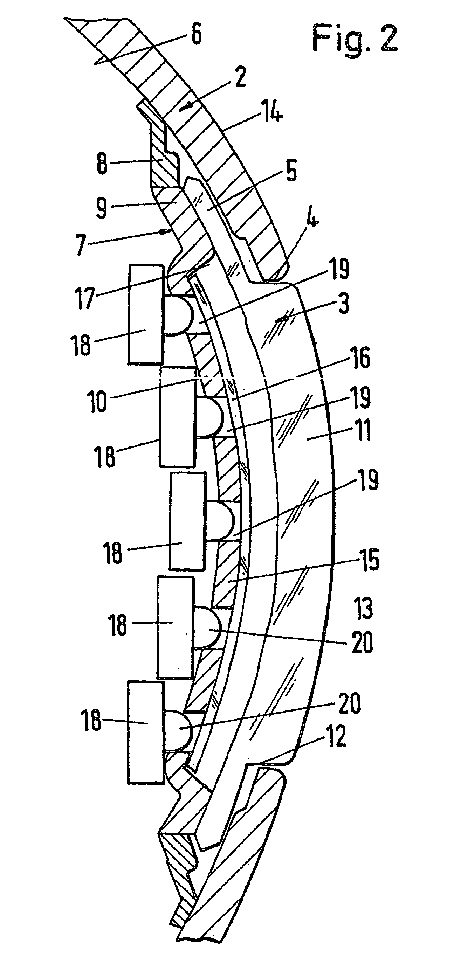

Das Lichtfenster 3 ist als Lichtleiter ausgebildet, mit dem eine optimale Ausleuchtung des Lichtfensters gewährleistet ist. Wie Fig. 2 zeigt, ist das Lichtfenster 3 in eine Einbauöffnung 4 des Spiegelgehäuses 2 eingesetzt. Das Lichtfenster 3 hat einen umlaufenden Rand 5, der dünner ist als der in der Einbauöffnung 4 angeordnete Teil des Lichtfensters 3 (Fig. 2). Mit dem umlaufenden Rand 5 liegt das Lichtfenster 3 an der Innenseite 6 des Gehäuses 2 längs des Randes der Einbauöffnung 4 an. Das Lichtfenster 3 wird durch ein Abdeckteil 7 gegen die Innenseite 6 des Gehäuses 2 gedrückt. Das Abdeckteil 7 ist längs seines Randes mit einer umlaufenden Dichtung 8 versehen, die vorzugsweise aus Gummi besteht und an der Innenseite 6 des Gehäuses 2 dichtend anliegt. Die umlaufende Dichtung 8 ist vorteilhaft an den Rand des Abdeckteiles 7 angespritzt.

Das Abdeckteil 7 hat einen umlaufenden Rand 9, der flächig am Rand 5 des Lichtfensters 3 anliegt. Der übrige Teil 10 des Abdeckteiles 7 ist gegenüber dem Rand 9 zurückgesetzt und hat Abstand vom Lichtfenster 3. Der Bereich 10 des Abdeckteiles 7 ist etwa dem Umriß des in der Einbauöffnung 4 befindlichen Teiles des Lichtfensters 3 angepaßt. Das Abdeckteil 7 wird in geeigneter Weise am Gehäuse 2 befestigt, vorzugsweise lösbar, beispielsweise mittels Schrauben und dergleichen. Mit dem Abdeckteil 7 wird der Rand 5 des Lichtfensters 3 fest gegen die Innenseite 6 des Gehäuses 2 gedrückt. Dabei wird auch die randseitige Dichtung 8 elastisch verformt, so daß sie eine einwandfreie Abdichtung gewährleistet. Der Rand 5 des Lichtfensters 3 ist an die Innenseite 6 des Gehäuses 2 angepaßt, so daß der Rand 5 flächig an der Innenseite des Gehäuses anliegt. Das Lichtfenster 3 ist dadurch einwandfrei lagegesichert. Der in der Einbauöffnung 4 befindliche Teil 11 des Lichtfensters 3 ist so ausgebildet, daß er mit seinem Rand 12 am Rand der Einbauöffnung 4 anliegt, allenfalls nur geringen Abstand von ihm hat. Die Außenseite 13 des Lichtfensters 3 ist so ausgebildet, daß sie eine stetige Fortsetzung der Außenseite 14 des Gehäuses 2 im Bereich der Einbauöffnung 4 bildet.

Auf der dem Lichtfenster 3 zugewandten Außenseite 15 des mittleren Teils 10 des Abdeckteiles 7 ist eine Folie 16 oder eine entsprechend dünne Kunststoffscheibe aufgebracht, die lichtdurchlässig ist. Die Folie/Kunststoffscheibe 16 kann farblos oder auch eingefärbt sein. Vorteilhaft liegt die Folie/Kunststoffscheibe 16 mit ihrem Rand am Übergangsbereich 17 zwischen dem mittleren Teil 10 und dem Rand 9 des Abdeckteiles 7 an. Dieser Übergangsbereich 17 überragt die Folie/Kunststoffscheibe 16, so daß zur Lagesicherung keine zusätzlichen Bauteile erforderlich sind.

Hinter dem Abdeckteil 7 sind LEDs 18 angeordnet, die, wie aus Fig. 1 hervorgeht, an dem vom Kraftfahrzeug abgewandten Endbereich des Lichtfensters 3 über- und nebeneinander angeordnet sind. Die LEDs 18 haben eine lange Lebensdauer und kurze Einschaltzeiten. Die LEDs 18 sind in geeigneter Weise im Spiegelkopf 1 befestigt und an das Bordnetz des Kraftfahrzeuges angeschlossen. Damit das von den LEDs 18 ausgesandte Licht durch das Lichtfenster 3 nach außen treten kann, ist das Abdeckteil 7 mit Durchtrittsöffnungen 19 für die LEDs 18 versehen. In die zylindrisch ausgebildeten Durchtrittsöffnungen 19 ragen die LEDs 18 mit ihrem Leuchtkörper 20 (Fig. 2). Die Durchtrittsöffnungen 19 dienen als Blendschutz bei schräg einfallendem Sonnenlicht. Da die Leuchtkörper 20 der LEDs 18 nur teilweise in die Durchtrittsöffnungen 19 ragen, wird somit gewährleistet, daß bei schräg einfallendem Sonnenlicht das beleuchtete Lichtfenster 3 dennoch zuverlässig erkannt werden kann. Die LEDs 18 können eingefärbt sein; in diesem Fall ist die Folie/Kunststoffscheibe 18 farblos ausgebildet. Es ist aber auch möglich, weiße LEDs 18 zu verwenden und, sofern ein bestimmter Farbton gewünscht wird, eine entsprechend eingefärbte Folie/Kunststoffscheibe 16 vorzusehen.

Das von den LEDs 18 ausgesandte Licht gelangt durch die Durchtrittsöffnungen 19 und die Folie/Kunststoffscheibe 16 auf das Lichtfenster 3. Da es als Lichtleiter ausgebildet ist, wird das auffallende Licht über die gesamte Fläche des Lichtfensters 3 verteilt. Das beleuchtete Lichtfenster 3 ist gut zu erkennen, selbst bei starker Sonneneinstrahlung. Da sich das Lichtfenster 3 etwa vom Spiegelfuß bis nahe zum vom Kraftfahrzeug abgewandten Ende des Spiegelgehäuses 2 erstreckt, ist das beleuchtete Lichtfenster 3 im Verkehr einwandfrei und zuverlässig zu erkennen. Das Lichtfenster 3 kann selbstverständlich auch eine andere Umrißform haben, als beispielhaft in Fig. 1 dargestellt ist. Es können auch mehrere Lichtfenster 3 vorgesehen sein. Die LEDs 18 mit dem Lichtfenster 3 können beispielsweise als Wiederholblinkleuchte dienen.

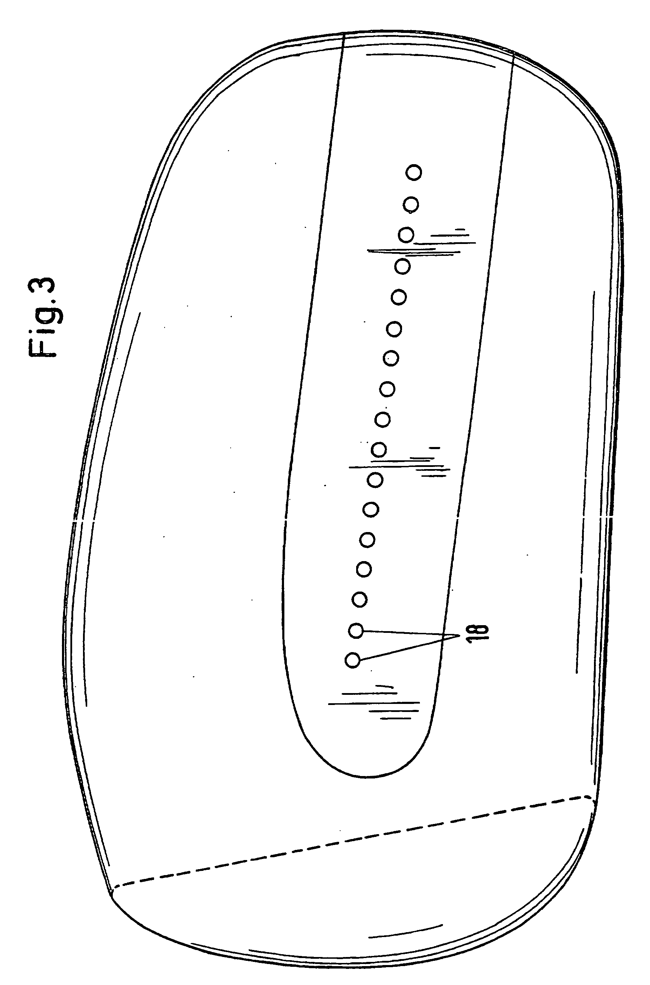

Fig. 3 zeigt die Möglichkeit, die LEDs 18 beispielsweise in einer Reihe längs des Lichtfensters 3 anzuordnen. Auch dadurch wird eine optimale Ausleuchtung des Lichtfensters 3 erreicht. Die Anordnung der LEDs 18 kann je nach Einsatzfall des Lichtfensters 3 abweichend von den dargestellten Ausführungsbeispielen gewählt werden.

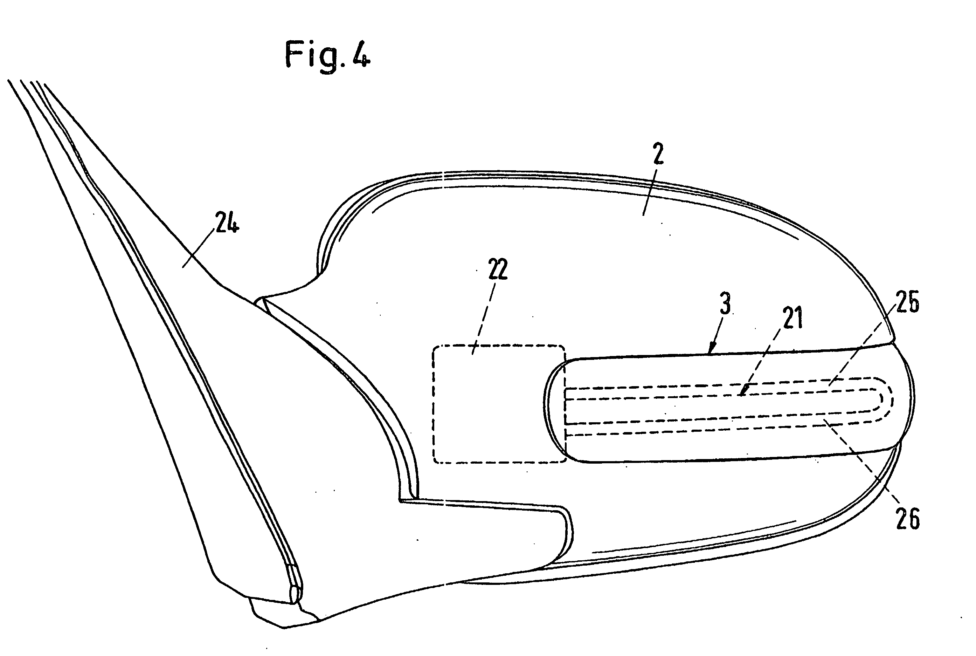

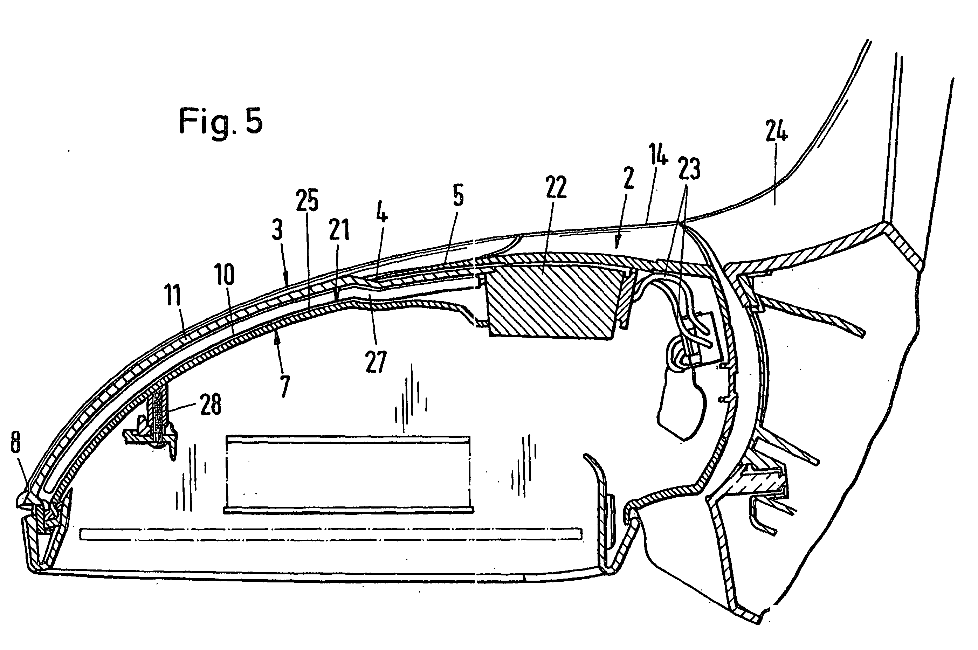

Beim nicht zur Erfindung gehörenden Ausführungsbeispiel nach den Fig. 4 und 5 erstreckt sich das Lichtfenster 3, das wiederum etwa in halber Höhe des Spiegelkopfgehäuses 2 vorgesehen ist, von dem am weitesten vom Spiegelfuß 1 entfernt liegenden Ende etwa über die halbe Länge des Spiegelkopfgehäuses 2. Das Lichtfenster 3 ist wiederum als Lichtleiter ausgebildet, mit dem eine optimale Ausleuchtung des Lichtfensters sichergestellt ist. Unmittelbar hinter dem Lichtfenster 3 befindet sich als Lichtquelle eine in Ansicht (Fig. 4) U-förmig gebogene Leuchtstoffröhre 21, die an ein im Spiegelkopfgehäuse 2 untergebrachtes Steuergerät 22 angeschlossen ist. Es sitzt vorteilhaft unmittelbar benachbart zum Lichtfenster 3 an der Innenseite des Spiegelkopfgehäuses 2 (Fig. 5) und ist über leitungen 23, die durch den Spiegelfuß 24 geführt sind, mit dem Bordnetz des Kraftfahrzeuges verbunden.

Der Lichtleiter 3 hat wiederum einen in der Einbauöffnung 4 befindlichen Teil 11, der vorteilhaft so ausgebildet ist, daß er im Bereich der Einbauöffnung 4 eine stetige Fortsetzung der Außenseite 14 des Spiegelkopfgehäuses 2 bildet. Das Lichtfenster 3 hintergreift mit einem umlaufenden Rand 5 den Rand der Einbauöffnung 4. Wie bei den vorigen Ausführungsformen ist das Lichtfenster mit der Dichtung 8 versehen, die an der Innenwand 6 des Gehäuses 2 dichtend anliegt.

Die Leuchtstoffröhre 21 liegt zwischen dem Lichtfenster 3 und dem Abdeckteil 7, das das Lichtfenster 3 an der Rückseite vorzugsweise vollständig abdeckt.

Die beiden Schenkel 25, 26 (Fig. 4) der Leuchtstoffröhre 21 erstrekken sich vom spiegelfußseitigen Ende bis zum vom Spiegelfuß entfernten Ende des Lichtfensters 3 und gehen bogenförmig ineinander über. Die beiden Schenkel 25, 26 liegen mit Abstand übereinander sowie, in Rückansicht gemäß Fig. 4 gesehen, in halber Höhe des Lichtfensters 3. Wie Fig. 5 zeigt, sind die Schenkel 25, 26 an die Querschnittsform des Lichtfensters 3 angepaßt, so daß sie entsprechend dem Lichtfenster 3 im Randbereich mit einer Kröpfung 27 versehen sind. Das Abdeckteil 7 ist mit Schrauben 28 am Spiegelkopfgehäuse 2 befestigt.

Aufgrund der U-förmigen Ausbildung der Leuchtstoffröhre 21 wird eine optimale Ausleuchtung des Lichtfensters 3 erreicht. Wie Fig. 4 zeigt, erstrecken sich die beiden Schenkel 25, 26 der Leuchtstoffröhre 21 bis nahe an das vom Spiegelfuß 24 abgewandte Ende des Lichtfensters 3. Die Leuchtstoffröhre 21 kann auch eine andere Formgebung haben, die jedoch so vorgesehen ist, daß das Lichtfenster 3 optimal beleuchtet wird. Die Leuchtstoffröhre 21 kann weißes. aber auch farbiges Licht abstrahlen. Das Lichtfenster 3 kann wie beim vorigen Ausführungsbeispiel farblos, aber auch eingefärbt sein. Ebenso ist es möglich, auf der dem Lichtfenster 3 zugewandten Außenseite des mittleren Teiles 10 des Abdeckteiles 7 eine Folie oder eine entsprechend dünne Kunststoffscheibe aufzubringen, die lichtdurchlässig ist. Die Folie/Kunststoffscheibe kann farblos oder auch eingefärbt sein.

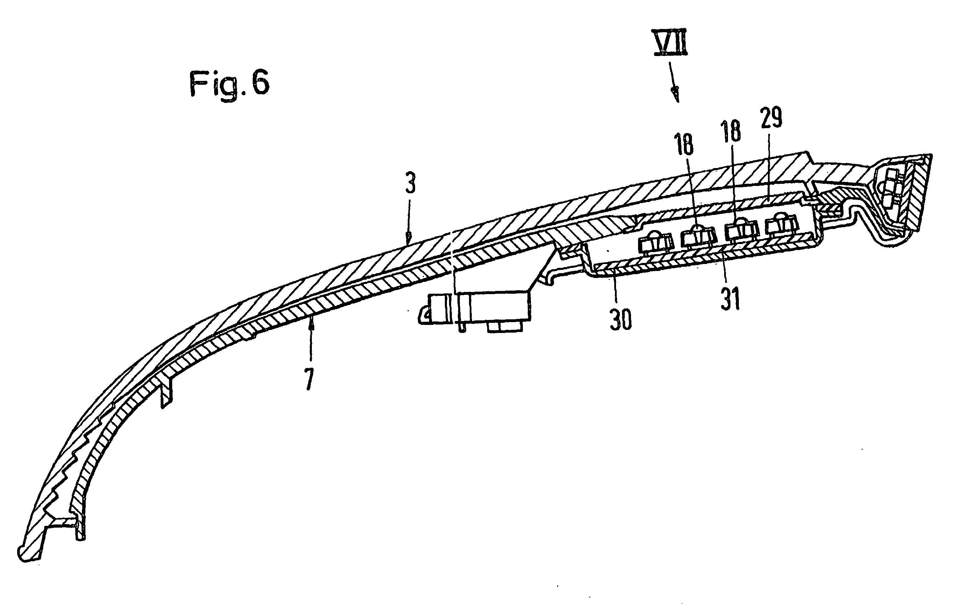

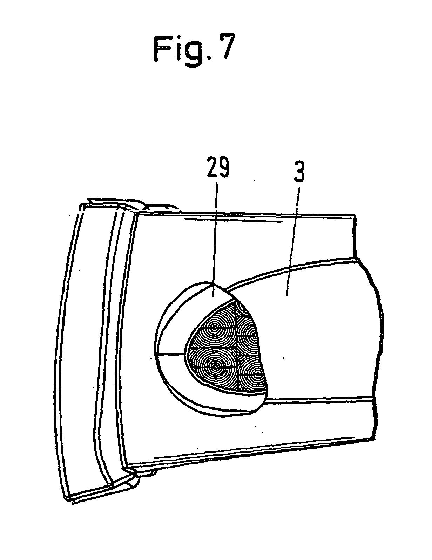

Das Lichtfenster 3 bei der Ausführungsform nach den Fig. 6 und 7 ist wiederum als Lichtleiter ausgebildet, mit dem eine optimale Ausleuchtung des Lichtfensters gewährleistet ist. Dieses Lichtfenster 3 ist entsprechend den vorherigen Ausführungsformen in eine Einbauöffnung des Spiegelkopfgehäuses eingesetzt. Hinter dem Lichtfenster 3 befindet sich mit geringem Abstand von ihm das Abdeckteil 7, dessen Form im wesentlichen an die Form des Lichtfensters 3 angepaßt ist. Nahe dem spiegelfußseitigen Ende des Lichtfensters 3 ist das Abdeckteil 7 mit einer Fresneloptik 29 versehen. Sie kann einstückig mit dem Abdeckteil 7 ausgebildet, jedoch auch als gesondertes Teil von ihm vorgesehen sein. Auf der vom Lichtfenster 3 abgewandten Seite der Fresneloptik 29 befindet sich eine Leiterplatte 30, welche als Leuchtkörper LEDs 18 trägt. Die Leiterplatte 30 ist in einem Gehäuse 31 untergebracht, das an der vom Lichtfenster 3 abgewandten Seite des Abdeckteiles 7 befestigt ist.

Das Lichtfenster 3, das Abdeckteil 7 sowie das Gehäuse 31 mit den darin untergebrachten LEDs 18 und der Leiterplatte 30 bilden eine vormontierte Einbaueinheit, die einfach in das Spiegelkopfgehäuse 2 eingesetzt und in geeigneter Weise an ihm befestigt werden kann. Die Fresneloptik 29 sorgt dafür, daß das von den LEDs 18 ausgesandte Licht optimal auf das Lichtfenster 3 übertragen wird. Da es aus Lichtleitermaterial besteht, wird das Lichtfenster über seine gesamte Fläche optimal ausgeleuchtet. Das Gehäuse 31 ist abgedichtet so daß Schmutz und/oder Feuchtigkeit nicht an die Leiterplatte 30 und/oder an die LEDs 18 gelangen kann.

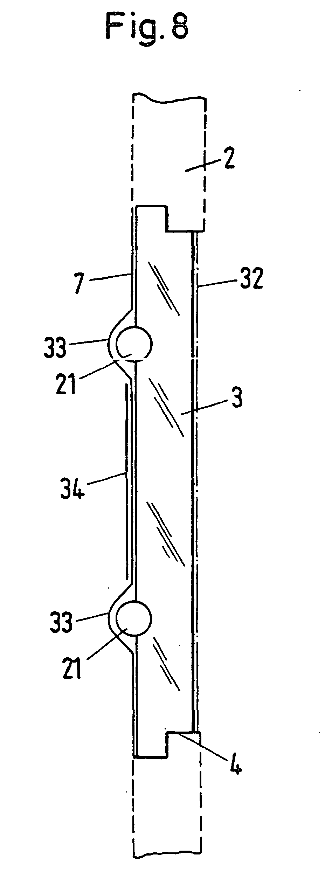

Fig. 8 zeigt schematisch und im Schnitt das Lichtfenster 3, das wiederum aus Lichtleitermaterial gefertigt ist. Es ist, wie bei den vorigen Ausführungsbeispielen, in die Einbauöffnung 4 des Spiegelkopfgehäuses 2 eingesetzt. Auf der Außenseite des Lichtfensters 3 ist eine optisch wirksame Schicht 32 aufgebracht, die durch Prismen, vorzugsweise eine Fresneloptik, Linsen und dergleichen gebildet sein kann. Auf der Rückseite des Lichtfensters 3 befindet sich wiederum das Abdeckteil 7, mit dem das Lichtfenster 3 rückseitig abgedeckt ist. In die Rückseite des Lichtfensters 3 ist mindestens eine Leuchtstoffröhre 21 teilweise eingebettet. Die Leuchtstoffröhre 21 kann entsprechend dem Ausführungsbeispiel nach den Fig. 4 und 5 ausgebildet sein, so daß Fig. 8 die beiden Schenkel der U-förmigen Leuchtstoffröhre zeigt. Es ist aber auch möglich, zwei Leuchtstoffröhren 21 vorzusehen. Sie sind im Ausführungsbeispiel etwa zur Hälfte in das Lichtfenster 3 eingebettet, das aus Lichtleitermaterial besteht. Die beiden Leuchtstoffröhren 21 sind entsprechend der Ausführungsform nach den Fig. 4 und 5 CFLs (cold fluorescent lamp). Im Bereich dieser Leuchtstoffröhren 21 ist das Abdeckteil 7 zu Reflektoren 33 geformt, die die Leuchtstoffröhren 21 mit Abstand umgeben. Die Reflektoren 33 können selbstverständlich auch vom Abdeckteil 7 getrennte Elemente sein. In diesem Fall ist das Abdeckteil 7 im Bereich der Leuchtstoffröhren 21 unterbrochen. Die Reflektoren 33 gewährleisten, daß das von den Leuchtstoffröhren 21 ausgesandte Licht optimal zum Lichtfenster 3 gelangt.

Im Bereich zwischen den beiden Reflektoren 33 befindet sich wenigstens ein Heizelement 34, das vorteilhaft als Heizfolie ausgebildet ist, die auf dem Abdeckteil 7 befestigt wird. Das Heizelement 34, das an das Kraftfahrzeugnetz angeschlossen ist, erwärmt die Reflektoren 33 bzw. das Abdeckteil 7, so daß die Leuchtstoffröhren 21 auf einer optimalen Temperatur gehalten werden. Eine solche optimale Temperatur liegt bei etwa 25°C. Durch das Heizelement 34 kann auch das Lichtfenster 3 beschlagfrei gehalten werden. Das Heizelement 34 wird vorzugsweise geregelt geheizt, wofür ein Thermostat, ein PTC oder dergleichen verwendet werden kann.

Es ist auch möglich, das Abdeckteil 7 durch ein Heizelement, vorzugsweise durch eine Heizfolie, zu bilden. Die Leuchtstoffröhren 21 geben üblicherweise gelbes Licht ab, so daß das Lichtfenster 3 glasklar sein kann. Es ist aber möglich, das Lichtfenster 3 auch in einem Farbton zu halten oder an der Rückseite des Lichtfensters 3 eine entsprechend eingefärbte Folie zu verwenden.

Die Leuchtstoffröhre läßt sich an die Kontur des Lichtfensters 3 anpassen, wie dies beispielhaft beim Ausführungsbeispiel nach den Fig. 4 und 5 dargestellt und beschrieben worden ist. Dadurch kann das Lichtfenster 3 die unterschiedlichsten Formgestaltungen haben.

## Patentansprüche

1. Außenrückblickspiegel für Fahrzeuge, vorzugsweise für Kraftfahrzeuge, mit einem Spiegelkopf (1), in dessen Gehäuse (2) ein verstellbares Spiegelglas untergebracht und in dem mindestens eine Lichtquelle (18, 21) angeordnet ist, die im Bereich hinter einem Lichtfenster (3) vorgesehen ist, das am Gehäuse (2) angeordnet ist und wenigstens teilweise aus Lichtleitermaterial besteht,
**dadurch gekennzeichnet, daß** die Lichtquelle (18,21) hinter wenigstens einem Abdeckteil (7) liegt, das vorteilhaft wenigstens eine Durchtrittsöffnung (19) für das von der Lichtquelle ausgesandte Licht aufweist.

2. Außenrückblickspiegel nach Anspruch 1,
**dadurch gekennzeichnet, daß** das Lichtfenster (3) mit einem zumindest teilweise umlaufenden Rand (5) an der Innenseite (6) des Gehäuses (2) anliegt.

3. Außenrückblickspiegel nach Anspruch 1 oder 2,
**dadurch gekennzeichnet, daß** die Lichtquelle eine LED (18) ist.

4. Außenrückblickspiegel nach Anspruch 1 oder 2,
**dadurch gekennzeichnet, daß** die Lichtquelle eine Leuchtstoffröhre (21) ist.

5. Außenrückblickspiegel nach einem der Ansprüche 1 bis 4,
**dadurch gekennzeichnet, daß** zumindest die Durchtrittsöffnung (19) durch eine lichtdurchlässige Abdeckung (16) verdeckt ist, die vorzugsweise eine Folie oder eine dünne Kunststoffscheibe ist.

6. Außenrückblickspiegel nach Anspruch 5,
**dadurch gekennzeichnet, daß** die vorzugsweise durch das Abdeckteil (7) lagegesicherte Abdeckung (16) mit Abstand hinter dem Lichtfenster (3) angeordnet ist.

7. Außenrückblickspiegel nach Anspruch 5 oder 6,
**dadurch gekennzeichnet, daß** die Abdeckung (16) farblos ist.

8. Außenrückblickspiegel nach Anspruch 5 oder 6,
**dadurch gekennzeichnet, daß** die Abdeckung (16) eingefärbt ist.

9. Außenrückblickspiegel nach einem der Ansprüche 1 bis 8,
**dadurch gekennzeichnet, daß** das Abdeckteil (7) einen vorspringenden Rand (9) aufweist, der am Rand (5) des Lichtfensters (3) anliegt.

10. Außenrückblickspiegel nach einem der Ansprüche 1 bis 9,
**dadurch gekennzeichnet, daß** das Abdeckteil (7) den Rand (5) des Lichtfensters (3) gegen die Innenseite (6) des Gehäuses (2) drückt und vorteilhaft mit einer umlaufenden Dichtung (8) an der Innenseite (6) des Gehäuses (2) anliegt, die den Rand (5) des Lichtfensters (3) vorteilhaft mit Abstand umgibt.

11. Außenrückblickspiegel nach einem der Ansprüche 3 und 6 bis 10,
**dadurch gekennzeichnet, daß** die LED (18) teilweise in die Durchtrittsöffnung (19) des Abdeckteiles (7) ragt.

12. Außenrückblickspiegel nach einem der Ansprüche 3 und 6 bis 11,
**dadurch gekennzeichnet, daß** mehrere vorzugsweise über die Länge und/oder Breite des Lichtfensters (3) verteilt angeordnete LEDs (18) an dem vom Fahrzeug abgewandten Endbereich des Lichtfensters (3) angeordnet sind.

13. Außenrückblickspiegel nach Anspruch 3,
**dadurch gekennzeichnet, daß** mehrere LEDs (18) hinter einer Fresneloptik (29) liegen, die vorzugsweise im Bereich zwischen dem Abdeckteil (7) und dem Lichtfenster (3) angeordnet und mit dem Abdeckteil (7) verbunden ist.

14. Außenrückblickspiegel nach Anspruch 13,
**dadurch gekennzeichnet, daß** die LEDs (18) in einem Gehäuse (31) untergebracht sind, das vorteilhaft mit dem Abdeckteil (7) verbunden und an der vom Lichtfenster (3) abgewandten Seite des Abdeckteiles (7) vorgesehen ist.

15. Außenrückblickspiegel nach Anspruch 4,
**dadurch gekennzeichnet, daß** die Leuchtstoffröhre (21) U-förmig ausgebildet und vorzugsweise wenigstens teilweise in das Lichtfenster (3) eingebettet ist.

16. Außenrückblickspiegel nach Anspruch 4,
**dadurch gekennzeichnet, daß** die Leuchtstoffröhre (21) vor einem vorzugsweise durch einen verformten Abschnitt des Abdeckteiles (7) gebildeten Reflektor (33) liegt, der vorteilhaft Teil des Abdeckteiles (7) ist.

17. Außenrückblickspiegel nach einem der Ansprüche 1 bis 16,
**dadurch gekennzeichnet, daß** das Lichtfenster (3) wenigstens teilweise beheizt ist, und daß vorteilhaft zum Beheizen des Lichtfensters (3) wenigstens ein Heizelement (34) vorgesehen ist, das vorzugsweise auf der vom Lichtfenster (3) abgewandten Seite des Abdeckteiles (7) vorgesehen ist.

18. Außenrückblickspiegel nach einem der Ansprüche 1 bis 17,
**dadurch gekennzeichnet, daß** das vorteilhaft durch eine Heizfolie gebildete Heizelement (34) wenigstens durch einen Teil des Abdeckteiles (7) gebildet ist.

## Claims

1. An external rear-view mirror for vehicles, preferably for motor vehicles, with a mirror head (1), in the housing (2) of which an adjustable mirror glass is accommodated and in which at least one light source (18, 21) is arranged which is provided in the region behind a light window (3) which is arranged on the housing (2) and consists at least in part of optical-fibre material, **characterized in that** the light source (18, 21) is situated behind at least one cover part (7) which advantageously has at least one entry opening (19) for the light emitted by the light source.

2. An external rear-view mirror according to Claim 1, **characterized in that** the light window (3) rests against the inner side (6) of the housing (2) with an edge (5) which is continuous at least in part.

3. An external rear-view mirror according to Claim 1 or 2, **characterized in that** the light source is a light-emitting diode (18).

4. An external rear-view mirror according to Claim 1 or 2, **characterized in that** the light source is a fluorescent tube (21).

5. An external rear-view mirror according to one of Claims 1 to 4, **characterized in that** at least the entry opening (19) is covered by a transparent covering (16) which is preferably a sheet or a thin plate of plastics material.

6. An external rear-view mirror according to Claim 5, **characterized in that** the covering (16), which is preferably secured in position by the cover part (7), is arranged at a distance behind the light window (3).

7. An external rear-view mirror according to Claim 5 or 6, **characterized in that** the covering (16) is colourless.

8. An external rear-view mirror according to Claim 5 or 6, **characterized in that** the covering (16) is coloured.

9. An external rear-view mirror according to one of Claims 1 to 8, **characterized in that** the cover part (7) has a projecting edge (9) which rests against the edge (5) of the light window (3).

10. An external rear-view mirror according to one of Claims 1 to 9, **characterized in that** the cover part (7) presses the edge (5) of the light window (3) against the inner side (6) of the housing (2), and advantageously rests with a continuous seal (8) against the inner side (6) of the housing (2), which advantageously surrounds the edge (5) of the light window (3) at a distance.

11. An external rear-view mirror according to one of Claims 3 and 6 to 10, **characterized in that** the LED (18) projects in part into the entry opening (19) of the cover part (7).

12. An external rear-view mirror according to one of Claims 3 and 6 to 11, **characterized in that** a plurality of LEDs (18) preferably arranged distributed over the length and/or width of the light window (3) are arranged at the end region of the light window (3) remote from the vehicle.

13. An external rear-view mirror according to Claim 3, **characterized in that** a plurality of LEDs (18) are situated behind a Fresnel lens (29) which is preferably arranged in the region between the cover part (7) and the light window (3) and is connected to the cover part (7).

14. An external rear-view mirror according to Claim 13, **characterized in that** the LEDs (18) are accommodated in a housing (31) which is advantageously connected to the cover part (7) and which is provided on the side of the cover part (7) remote from the light window (3).

15. An external rear-view mirror according to Claim 4, **characterized in that** the fluorescent tube (21) is U-shaped and is preferably embedded at least in part in the light window (3).

16. An external rear-view mirror according to Claim 4, **characterized in that** the fluorescent tube (21) is situated in front of a reflector (33) which is preferably formed by a shaped portion of the cover part (7) and which is advantageously part of the cover part (7).

17. An external rear-view mirror according to one of Claims 1 to 16, **characterized in that** the light window (3) is heated at least in part, and at least one heating element (34), which is preferably provided on the side of the cover part (7) remote from the light window (3), is advantageously provided for heating the light window (3).

18. An external rear-view mirror according to one of Claims 1 to 17, **characterized in that** the heating element (34) advantageously formed by a heating foil is formed at least by part of the cover part (7).

## Revendications

1. Rétroviseur extérieur pour véhicules, de préférence pour véhicules automobiles, comportant une tête de rétroviseur (1), dans le boîtier (2) de laquelle est logé un miroir réglable et dans laquelle est agencée au moins une source lumineuse (18, 21) qui est prévue dans la région derrière une fenêtre lumineuse (3) qui est agencée sur le boîtier (2) et qui est constituée par au moins un matériau à guide optique,
**caractérisé en ce que** la source lumineuse (18, 21) est située derrière au moins une partie de recouvrement (7) qui présente avantageusement au moins une ouverture de passage (19) pour la lumière émise par la source lumineuse.

2. Rétroviseur extérieur selon la revendication 1, **caractérisé en ce que** la fenêtre lumineuse (3) est en appui contre la face intérieure (6) du boîtier (2) par un bord (5) au moins partiellement périphérique.

3. Rétroviseur extérieur selon l'une ou l'autre des revendications 1 et 2, **caractérisé en ce que** la source lumineuse est une diode luminescente (18).

4. Rétroviseur extérieur selon l'une ou l'autre des revendications 1 et 2, **caractérisé en ce que** la source lumineuse est un tube fluorescent (21).

5. Rétroviseur extérieur selon l'une des revendications 1 à 4, **caractérisé en ce qu'**au moins l'ouverture de passage (19) est recouverte par un couvercle (16) translucide qui est de préférence une feuille ou une plaque de matière plastique mince.

6. Rétroviseur extérieur selon la revendication 5, **caractérisé en ce que** le couvercle (16), de préférence assuré dans sa position par la partie de recouvrement (7), est agencé à distance derrière la fenêtre lumineuse (3).

7. Rétroviseur extérieur selon l'une ou l'autre des revendications 5 et 6, **caractérisé en ce que** le couvercle (16) est incolore.

8. Rétroviseur extérieur selon l'une ou l'autre des revendications 5 et 6, **caractérisé en ce que** le couvercle (16) est coloré.

9. Rétroviseur extérieur selon l'une des revendications 1 à 8, **caractérisé en ce que** la partie de recouvrement (7) présente un bord (9) en saillie qui est en appui contre le bord (5) de la fenêtre lumineuse (3).

10. Rétroviseur extérieur selon l'une des revendications 1 à 9, **caractérisé en ce que** la partie de recouvrement (7) presse le bord (5) de la fenêtre lumineuse (3) contre la face intérieure (6) du boîtier (2) et est avantageusement en appui, avec un joint (8) périphérique, contre la face intérieure (6) du boîtier (2), laquelle entoure avantageusement à distance le bord (5) de la fenêtre lumineuse (3).

11. Rétroviseur extérieur selon l'une des revendications 3 et 6 à 10, **caractérisé en ce que** la diode électroluminescente (18) fait en partie saillie dans l'ouverture de passage (19) de la partie de recouvrement (7).

12. Rétroviseur extérieur selon l'une des revendications 3 et 6 à 11, **caractérisé en ce que** plusieurs diodes électroluminescentes (18) avantageusement réparties sur la longueur et/ou sur la largeur de la fenêtre lumineuse (3) sont agencées sur la région d'extrémité de la fenêtre lumineuse (3), qui est détournée du véhicule.

13. Rétroviseur extérieur selon la revendication 3, **caractérisé en ce que** plusieurs diodes électroluminescentes (18) se trouvent derrière une optique de Fresnel (29) qui est agencée de préférence dans la région entre la partie de recouvrement (7) et la fenêtre lumineuse (3) et qui est reliée à la partie de recouvrement (7).

14. Rétroviseur extérieur selon la revendication 13, **caractérisé en ce que** les diodes électroluminescentes (18) sont logées dans un boîtier (31) qui est avantageusement relié à la partie de recouvrement (7) et qui est prévu sur la face de la partie de recouvrement (7), qui est détournée de la fenêtre lumineuse (3).

15. Rétroviseur extérieur selon la revendication 4, **caractérisé en ce que** le tube fluorescent (21) est réalisé en forme de U et est de préférence encastré au moins partiellement dans la fenêtre lumineuse (3).

16. Rétroviseur extérieur selon la revendication 4, **caractérisé en ce que** le tube fluorescent (21) est situé devant un réflecteur (33) formé de préférence par un tronçon mis en forme de la partie de recouvrement (7) et qui fait avantageusement partie de la partie de recouvrement (7).

17. Rétroviseur extérieur selon l'une des revendications 1 à 16, **caractérisé en ce que** la fenêtre lumineuse (3) est au moins partiellement chauffée, et **en ce que** pour chauffer la fenêtre lumineuse (3), il est prévu avantageusement au moins un élément de chauffage (34) qui est prévu avantageusement sur le côté de la partie de recouvrement (7), qui est détourné de la fenêtre lumineuse (3).

18. Rétroviseur extérieur selon l'une des revendications 1 à 17, **caractérisé en ce que** l'élément de chauffage (34) avantageusement formé par une feuille chauffante est formé au moins par une portion de la partie de recouvrement (7).
